# EUROPEAN PATENT APPLICATION

(11) **EP 4 787 403 A1**
(43) Date of publication of application: **05.08.2026**
(21) Application number: 25154802.0
(22) Date of filing: 29.01.2025
(51) Int. Cl.: H01B 13/02, G02B 6/50, H02G 1/10

(54) **METHOD OF SIMULTANEOUSLY LAYING A PLURALITY OF ELONGATE FLEXIBLE MEMBERS ON THE SEABED**

(71) Applicant: NKT HV Cables AB, 371 60 Lyckeby (SE)
(72) Inventor: STEVENSON, Ian, Newcastle, BT33 0QH (GB)
(74) Representative: Kransell & Wennborg KB

(57) **Abstract**

A method of simultaneously laying three or more elongate flexible members on a seabed from an installation vessel, the method comprising: a) advancing all the individual elongate flexible members to a first location where they are brought together to form a group of elongate flexible members, b) advancing the group of elongate flexible members from the first location to a second location at a first distance from the first location, while twisting the group of elongate flexible members in a first direction at least one turn between the first location and the second location to obtain a first direction twisted elongate flexible member group section, c) binding together at least a portion of the first direction twisted elongate flexible member group section at the second location, d) advancing the group of elongate flexible members from the first location to the second location while twisting the group of elongate flexible members in a second direction, opposite to the first direction, at least two turns between the first location and the second location to obtain a second direction twisted elongate flexible member group section following the first direction twisted elongate member group section, e) binding together at least a portion of the second direction twisted elongate flexible member group section at the second location, and repeating steps a)-e) until an entire length of the elongate flexible members has been laid on the seabed in an alternating twisted formation.

## Description

### TECHNICAL FIELD

The present disclosure generally relates to the laying of elongate flexible members, such as power cables, on the seabed from an installation vessel.

### BACKGROUND

Submarine cables are installed from marine vessels, such as cable laying ships or barges. Often, the submarine cables are fed from a drum or turntable to the seabed via a curved chute or lay wheel arranged on the vessel. The submarine cables are thus bent as they lay on the chute. The submarine cables are bent in the generally opposite direction to that on the chute or lay wheel when touching down on the seabed.

Recently power cable systems are starting to be designed with three direct current (DC) submarine power cables connecting two points of a power generation system. One for the plus pole, one for the minus pole, and one power cable for redundancy purposes. Such cable systems may also comprise a submarine fibre optic cable running externally along the length of the submarine power cables. This will introduce new installation complexities compared to a cable system with two high voltage direct current (HVDC) cables and one fibre-optic cable, especially in view of the benefits with installing all submarine cables connecting two points at the same time because it saves installation time, which reduces the risks of changing weather conditions at sea and costs that follow. Another benefit is that it requires less seabed disturbance as only one trench or burial campaign will be required rather than two separate trenches, which means less environmental impact and reduced impact on benthic organisms.

### SUMMARY

Common simultaneous installation of multiple cables can be done by bundling all submarine cables and lowering them into the water together. It is problematic to lower the cables if they are arranged in a flat configuration, i.e., arranged beside each other in one plane, because it is difficult to maintain the catenary stability. The cables with the lower specific gravity will want to move out of line with the others, risking damaging the fibre optic cable. In a trefoil configuration, with one power cable on top of the other power cables, the bundle will be bent over the chute and at the touchdown point. This leads to a mismatch in length of the power cables. The inner power cable(s) with respect to the curve formed by the bundle, is/are compressed and the outer(s) is/are elongated. With a tight bundle, this can lead to large compressive and tensile forces in the individual cables in the bundle and more complexity during the installation process.

In view of the above an object of the present disclosure is to provide a method of simultaneously laying three or more elongate flexible members on a seabed from an installation vessel, which solves or at least mitigates the problems of the prior art.

There is hence provided a method of simultaneously laying three or more elongate flexible members on a seabed from an installation vessel, the method comprising: a) advancing all the individual elongate flexible members to a first location where they are brought together to form a group of elongate flexible members, b) advancing the group of elongate flexible members from the first location to a second location at a first distance from the first location, while twisting the group of elongate flexible members in a first direction at least one turn between the first location and the second location to obtain a first direction twisted elongate flexible member group section, c) binding together at least a portion of the first direction twisted elongate flexible member group section at the second location, d) advancing the group of elongate flexible members from the first location to the second location while twisting the group of elongate flexible members in a second direction, opposite to the first direction, at least two turns between the first location and the second location to obtain a second direction twisted elongate flexible member group section following the first direction twisted elongate member group section, e) binding together at least a portion of the second direction twisted elongate flexible member group section at the second location, and repeating steps a)-e) until an entire length of the elongate flexible members has been laid on the seabed in an alternating twisted formation.

The method allows for delivering multiple elongate flexible members from an installation vessel to the seabed in a stable "bundle" configuration to allow burial/post protection without causing complications for trenching/burial tools. Due to the S-Z or Z-S alternating twisting of the group of elongate flexible members, the relative axial movement between the individual elongate flexible members can be restricted.

One of the elongate flexible members may according to one example have a lower specific gravity than the other elongate flexible members.

According to one embodiment in steps b) and d) the group of elongate flexible members are advanced in a direction towards the aft of the installation vessel.

According to one embodiment the first distance is equal to or greater than one catenary length of the group of elongate flexible members extending from the installation vessel towards the seabed. The catenary length is the length of a catenary line that the group of elongate flexible members follow from an exit point at the installation vessel to a touchdown point on the seabed. Thus, the length of each first/second direction twisted elongate member group section is in this example equal to or greater than the catenary length, each of which is thus cohesive by being bound at its ends points in steps c) and e).

In case the first distance is equal to or greater than one catenary length, the binding of the group of elongate flexible members may be for a limited length, e.g., less than half of the first length, along the first/second direction twisted elongate flexible member group section. For example, if the laying depth is 30 m and the catenary length is 45-50 m, then the binding could be made for a distance of 2-5 metres, or less than 10 m along the first/second direction twisted elongate flexible member group section. If the first distance is shorter than the catenary length, then continuous binding may be preferred to obtain a stable bundle of the group of elongate flexible members.

According to one embodiment the installation vessel includes N spaced apart turning device stations arranged on deck, wherein a first of the turning device stations is located at the first location and the other N-1 turning device stations are arranged between the first location and the second location, wherein the group of elongate flexible members are advanced through the turning device stations and the group of elongate flexible members is twisted 1/N of a turn at each turning device station.

According to one embodiment N=3.

N could alternatively be more than 3, depending on how much twisting is to be made at each turning device station.

The N turning device stations may be distributed one after the other on deck, at equal distance between each pair of adjacent turning device station.

According to one example, the N turning device stations may be movable on tracks or similar to travel with the group of elongate flexible members to aid in turning the group of elongate flexible members.

According to one embodiment the installation vessel comprises lay tensioners advancing the individual elongate flexible members towards the first location.

According to one embodiment each lay tensioner advances a respective one of the individual elongate flexible members towards the first location.

According to one embodiment a first and a second of the elongate flexible members are DC cables, and a third of the elongate flexible members is a metallic return cable. The metallic return cable may have a lower specific gravity than the first and the second of the elongate flexible members.

According to one embodiment the installation vessel is a cable laying vessel.

According to one embodiment step a) involves advancing a fibre optic cable, with a smaller outer diameter than the elongate flexible members, to the first location where it is grouped with the elongate flexible members, wherein the fibre optic cable grouped with the elongate flexible members is subjected to steps a)-e) and to their repetition.

According to one example step a) involves advancing a fibre optic cable, with a smaller outer diameter than the elongate flexible members, to any of the N turning device stations following the first location, such as the second, third or Nth turning device station, prior to the second location, where it is grouped with the group of elongate flexible members. Thus, the fibre optic cable is grouped with the group of elongate flexible members at a later point than the first turning device station. The fibre optic cable is therefore not twisted as much as the group of elongate flexible members.

According to one embodiment the elongate flexible members are three in number, and wherein in step a) the three individual elongate flexible members are grouped in a trefoil configuration.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 is a plan view of an example of a back deck of an installation vessel;
Fig. 2 is a plan view of the back deck with elongated flexible members extending along the back deck;
Figs 3A-3F show cross-sections at different locations along the length of the elongated flexible members as they extend on the back deck;
Fig. 4 schematically shows an example of a turning device station, S, on the back deck; and
Fig. 5 is a flowchart of a method of simultaneously laying three or more elongate flexible members on a seabed from the installation vessel.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

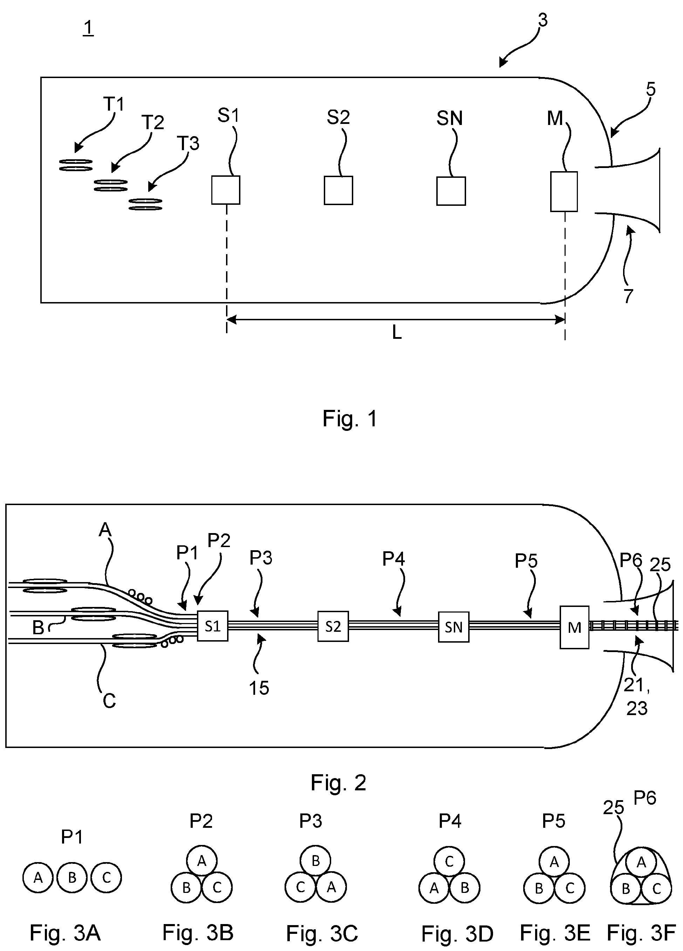

Fig. 1 is a plan view of a back deck 3 of an installation vessel 1.

The installation vessel 1 may for example be a cable laying vessel or a cable laying barge.

The installation vessel 1 has a chute or lay wheel 7. The chute or lay wheel 7 may be provided at the aft 5 of the installation vessel 1.

The installation vessel 1 is configured for simultaneously laying three or more elongate flexible members on the seabed via the chute or lay wheel 7. The elongate flexible elements may be power cables, flexible pipelines, flexible umbilicals, or telecommunications cables.

In case of power cables, a first and a second of the elongate flexible members may be DC cables, such as HVDC cables, and a third of the three elongate flexible members may be a metallic return cable.

In the example described herein, three elongate flexible members are simultaneously laid on the seabed from the installation vessel 1. Additionally, a fibre optic cable may be laid on the seabed together with the elongate flexible members.

The installation vessel 1 may be provided with a plurality of lay tensioners, or tensioning devices, T1-T3. The lay tensioners T1-T3 may be arranged on the back deck 3. Each lay tensioner T1-T3 may for example be one of a track tensioner or a capstan wheel.

According to the example, the number of lay tensioners T1-T3 is three, i.e., one for each elongate flexible member. There could in other examples be fewer lay tensioners for advancing three elongate flexible members, or there could be more than three lay tensioners in case more than three elongate flexible members are to be installed simultaneously. For instance, two elongate flexible members may in some examples be arranged in a piggybacked configuration and advanced along the back deck by a single lay tensioner T1, T2, T3, e.g., by a twin cable/product tensioning device. In this case, fewer lay tensioners would be required than the number of elongate flexible members that are to be installed simultaneously.

The installation vessel 1 may further be provided with a plurality of turning device stations S1-S_{N}. The turning device stations S1-SN are arranged on the back deck 3.

The turning device stations S₁-S_{N} are arranged one after the other in a direction towards the aft 5, i.e., in the aft direction, in relation to the lay tensioners T1-T3. The turning device stations S1-S_{N} are arranged one after the other between the lay tensioners T1-T3 and the chute or lay wheel 7 of the installation vessel 1.

The turning device stations S₁-SN may be arranged in line with each other.

The turning device stations S₁-SN may be arranged in line with the chute or lay wheel 7.

The turning device stations S₁-SN may be arranged to move in line with the chute or lay wheel 7 during lay.

The turning device stations S₁-SN and the chute or lay wheel 7 may be aligned with each other, i.e., they may be arranged one after the other in a straight line in a direction towards the aft 5.

According to the example, the number N of turning device stations S1-S_{N} is three, but N could more generally be a number equal to or greater than 3.

In one example, when the number of elongate flexible members is three, then N=3. According to some examples, N=the number of elongate flexible members laid simultaneously in a group from the installation vessel 1. The number N of turning device stations S1-S_{N} generally depends on the amount of twisting to be made at each station to achieve at least a full turn of the group of elongate flexible members before they are laid from the installation vessel 1. This may depend on the available space on the installation vessel 1, the design of the elongate flexible members, and available equipment onboard the installation vessel 1.

A first turning device station S1 is arranged at a first location on the back deck 3. The first turning device station S1 is located closest to the lay tensioners T1-T3 of all the turning device stations S1-S_{N}.

The distance between any pair of adjacent turning device stations S1-S_{N} may be equal. Thus, for example, the distance between the first turning device station S1, closest to the lay tensioners T1-T3, and the second turning device station S2 may be D, and the distance between the second turning device station S2 and the third turning device station S_{N} may also be D. In general, the distance between any pair of adjacent turning device stations Sn and Sn+1 may be D.

The installation vessel 1 is provided with a machine M arranged on the back deck 3. The machine M may be a wrapping, strapping, or bundling machine. The machine M is located at a second location on the back deck 3.

The second location may be arranged at a first distance L from the first location. The first distance L may according to one example be equal to, approximately equal to, or greater than one catenary length of the group of elongate flexible members extending from the installation vessel 1 towards the seabed during installation. With "approximately equal to" is here meant a range of 90-110% of the catenary length.

The machine M may be arranged in line with the turning device stations S1-S_{N}. The machine M may be arranged between the N^{th} turning device station S_{N} closest to the aft 5 and to the chute or lay wheel 7. The turning device stations S1-S_{N}, the machine M, and the chute or lay wheel 7 form a line for laying the elongate flexible members on the seabed.

The installation vessel 1 may comprise one or more storage units, such as cable drums, turntables, or cable carousels, for storage of the elongate flexible members to be laid on the seabed. The elongate flexible members are fed from the one or more storage units by means of the lay tensioners T1-T3 to the turning device stations S1-S_{N} as will be described in more detail herein.

With reference to Figs 2-5, a method of simultaneously laying three or more elongate flexible members A, B, C on the seabed from the installation vessel 1 will now be described.

In a step a) all the individual elongate flexible members A-C are advanced to the first location where they are brought together to form a group of elongate flexible members A-C.

The elongate flexible members A-C may be advanced by means of the lay tensioners T1-T3. For example, each elongate flexible member A-C may be advanced to the first location by means of a respective lay tensioner T1-T3.

The group of elongate flexible members may initially be arranged in a flat formation prior to reaching the first turning device station S1, as shown in Fig. 3A at position P1. The group of elongate flexible members may be laid in a trefoil configuration before reaching the first turning device station S1. This may for example be done by guiding one of the elongate flexible members A-C in flat formation onto the other two elongate flexible member A-C such that that elongate flexible member A-C is lifted onto the two elongate flexible members A-C or it could be provided naturally by the positioning of the lay tensioners. For example, one lay tensioner may be provided at an elevated position relative to the others, to raise of the elongate flexible members A-C above the other elongate flexible members A-C.

In a step b) the group 15 of elongate flexible members A-C is advanced from the first location to the second location. At the same time, the group 15 of elongate flexible members is twisted in a first direction at least one turn between the first location and the second location to obtain a first direction twisted elongate flexible member group section 21.

The twisting may be performed by the turning device stations S1-S_{N}. Each turning device station S1-S_{N} provides a partial twist of the group 15 of elongated flexible members A-C, causing the group 15 of elongate flexible members A-C to turn at least one full turn between the first location and the second location, i.e., between the first turning device station S1 and the machine M.

In the example in Figs 2-3E, the group 15 of elongate flexible members A-C is advanced through the turning device stations S1-S_{N} and twisted 1/3 of a turn, or 120°, at each turning device station S1-S_{N}.

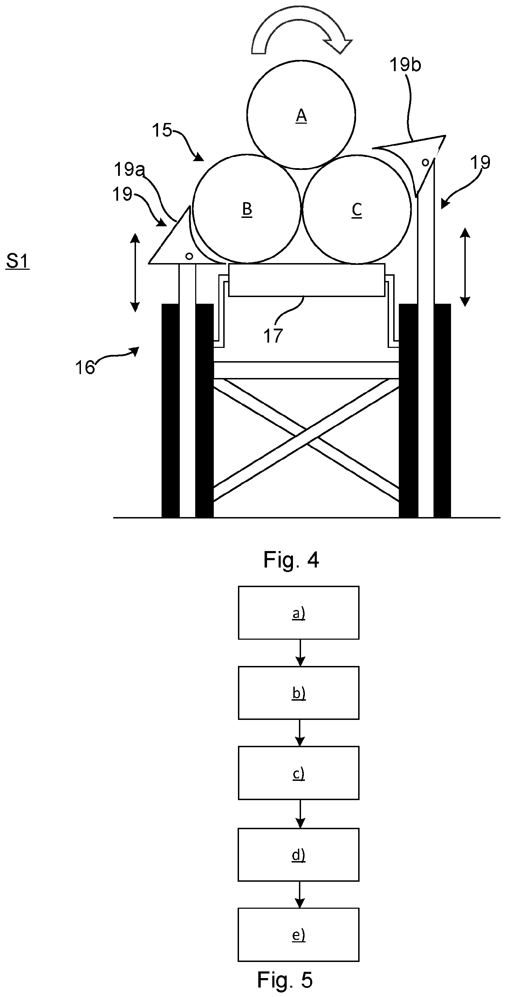

As shown in Fig. 4, in one example realisation, each turning device station S1-S_{N} may comprise a stand or platform 16 mounted on the back deck 3, and a roller or group of rollers 17 which facilitates advancing of the group 15 of elongate flexible members A-C over the turning device station S1-S_{N}. The roller 17 may be a single roller, or the group of rollers may comprise twin rollers, or multiple/more than two rollers in a horizontal or tilted configuration. The roller or group of rollers 17 may be active or passive. Further, each turning device station S1-S_{N} may comprise an actuator or actuators 19 configured to manipulate the elongate flexible members A-C. The actuator or actuators 19 may be hydraulic, mechanical, and/or electrical. The actuator or actuators 19 are configured to change the position of the elongate flexible members A-C on e.g., the roller or group of rollers 17 to obtain a partial twist of the group 15 of elongate flexible members A-C on the turning device station S1-S_{N}. In the example in Fig. 4, the lefthand side actuator 19 can be raised or lowered and has a manipulator 19a that can change orientation to engage with the leftmost elongate flexible member B. Similarly, the righthand side actuator 19 can be raised or lowered and has a manipulator 19b that can change orientation to engage with the rightmost elongate flexible member C. The configuration of the three elongate flexible members A-C can thus be changed. In the example in Fig. 4 the group of elongate flexible members A-C may be reconfigured from the trefoil configuration shown in Fig. 3B, at position P2 in Fig. 2, prior to the first turning device station S1, to the trefoil configuration shown in Fig. 3C at position P3 after the first turning device station S1.

At each of the remaining turning device station S2-SN, the actuator(s) and manipulators change the position of the group 15 of elongate flexible members A-C as the group 15 is advanced through these turning device stations S2-SN, as shown at positions P4-P5 in Fig. 2 and in Figs 3D-3E, respectively, to thereby provide a partial twisting of the group 15 of elongate flexible elements A-C.

When the group 15 of elongate flexible members A-C reaches the machine M, i.e., when the group 15 has been advanced the first distance L from the first position to the second position, the group 15 of elongate flexible members A-C has been turned one full turn or more than one full turn, depending on the example.

In a step c) at least a portion of the first direction twisted elongate flexible member group section 21 is bound at the second location, shown at position P6 in Figs 2 and 3F. The machine M binds, bundles, wraps, or straps at least a portion of the first direction twisted elongate flexible member group section 21 to keep the group 15 cohesive. The binding may be made e.g., with silo wrap/high strength cling film, elastic strapping bands, or yarn such as polymeric yarn.

The binding may be made continuously along the entire length of the first direction twisted elongate flexible member group section 21, or it can be made only along a limited distance along of the first direction twisted elongate flexible member group section 21. Fig. 2 shows an example where the binding 25 is made continuously.

In a step d) the group 15 of elongate flexible members A-C is advanced from the first location to the second location while twisting the group 15 of elongate flexible members in a second direction, opposite to the first direction, at least two turns between the first location and the second location. The first turn turns the group 15 of elongate flexible members back to its natural or original zero position, and the second turn twists it one turn past the original zero position. A second direction twisted elongate flexible member group section 23 is thus obtained following the first direction twisted elongate member group section 21. Hereto, the leading end of the second direction twisted elongate flexible member group section 23 reaches the second position and the machine M approximately when the trailing end of the first direction twisted elongate flexible member group section 21 is departing the chute or lay wheel 7.

In a step e) at least a portion of the second direction twisted elongate flexible member group section 23 is bound together at the second location. The machine M binds, wraps, or straps the at least a portion of the second direction twisted elongate flexible member group section 23 to keep the group 15 cohesive. The binding may be made e.g., with silo wrap/high strength cling film, elastic strapping bands, or yarn such as polymeric yarn.

The binding may be made continuously along the entire length of the second direction twisted elongate flexible member group section 23, or it can be made only along a limited distance along of the second direction twisted elongate flexible member group section 23.

Steps a)-e) are repeated until the entire length of the elongate flexible members has been laid on the seabed in twisted formation, i.e., in an alternating S-Z or Z-S formation.

In one example, step a) involves advancing a fibre optic cable, with a smaller outer diameter than the elongate flexible members A-C, to the first location where it is grouped with the elongate flexible members A-C. The fibre optic cable grouped with the elongate flexible members is then subjected to steps a)-e), i.e., fibre optic cable is thus also twisted by the turning device stations S1-S_{N} and bound together with the group of elongate flexible members A-C by the machine M at the second position. The fibre optic cable is thus also twisted in the first direction for the first length L with the elongate flexible members A-C, followed by twisting in the second direction for the first length L with the elongate flexible members A-C. Steps a)-e) are also in this example repeated until the entire length of the elongate flexible members A-C, and the fibre optic cable have been laid on the seabed in twisted formation.

In one example, the fibre optic cable is advanced just before the second location, i.e., after the final turning device station S1-SN, and joined with the group 15 of elongate flexible members after the final turning device station S1-SN. In this case, the fibre optic cable would not be twisted with the elongate flexible members.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of simultaneously laying three or more elongate flexible members (A, B, C) on a seabed from an installation vessel (1), the method comprising:
a) advancing all the individual elongate flexible members (A, B, C) to a first location where they are brought together to form a group (15) of elongate flexible members (A, B, C),
b) advancing the group (15) of elongate flexible members (A, B, C) from the first location to a second location at a first distance (L) from the first location, while twisting the group (15) of elongate flexible members (A, B, C) in a first direction at least one turn between the first location and the second location to obtain a first direction twisted elongate flexible member group section (21),
c) binding together at least a portion of the first direction twisted elongate flexible member group section (21) at the second location,
d) advancing the group (15) of elongate flexible members (A, B, C) from the first location to the second location while twisting the group (15) of elongate flexible members (A, B, C) in a second direction, opposite to the first direction, at least two turns between the first location and the second location to obtain a second direction twisted elongate flexible member group section (23) following the first direction twisted elongate member group section (21),
e) binding together at least a portion of the second direction twisted elongate flexible member group section (23) at the second location, and
repeating steps a)-e) until an entire length of the elongate flexible members (A, B, C) has been laid on the seabed in an alternating twisted formation.

2. Method as claimed in claim 1, wherein in steps b) and d) the group (15) of elongate flexible members (A, B, C) are advanced in a direction towards the aft (5) of the installation vessel (1).

3. Method as claimed in claim 1 or 2, wherein the first distance (L) is equal to or greater than one catenary length of the group (15) of elongate flexible members (A, B, C) extending from the installation vessel (1) towards the seabed.

4. Method as claimed in any of the preceding claims, wherein the installation vessel includes N spaced apart turning device stations (S1, S2, SN) arranged on deck (3), wherein a first of the turning device stations (S1) is located at the first location and the other N-1 turning device stations (S2, SN) are arranged between the first location and the second location, wherein the group (15) of elongate flexible members (A, B, C) are advanced through the turning device stations (S1, S2, SN) and the group (15) of elongate flexible members (A, B, C) is twisted 1/N of a turn at each turning device station (S1, S2, SN).

5. Method as claimed in claim 4, wherein N=3.

6. Method as claimed in any of the preceding claims, wherein the installation vessel (1) comprises lay tensioners (T1, T2, T3) advancing the individual elongate flexible members (A, B, C) towards the first location.

7. Method as claimed in any of the preceding claims, wherein each lay tensioner (T1, T2, T3) advances a respective one of the individual elongate flexible members (A, B, C) towards the first location.

8. Method as claimed in any of the preceding claims, wherein the elongate flexible members (A, B, C) are power cables.

9. Method as claimed in claim 8, wherein a first and a second of the elongate flexible members (A, B, C) are DC cables, and a third of the elongate flexible members (A, B, C) is a metallic return cable.

10. Method as claimed in any of the preceding claims, wherein the installation vessel (1) is a cable laying vessel.

11. Method as claimed in any of the preceding claims, wherein step a) involves advancing a fibre optic cable, with a smaller outer diameter than the elongate flexible members (A, B, C), to the first location where it is grouped with the elongate flexible members (A, B, C), wherein the fibre optic cable grouped with the elongate flexible members (A, B, C) is subjected to steps a)-e) and to their repetition.

12. Method as claimed in any of the preceding claims, wherein the elongate flexible members (A, B, C) are three in number, and wherein in step a) the three individual elongate flexible members (A, B, C) are grouped in a trefoil configuration.
